(19) Europäisches Patentamt / European Patent Office / Office européen des brevets

(11) **EP 3 915 807 A1**

(12) **EUROPEAN PATENT APPLICATION**

(43) Date of publication:
01.12.2021 Bulletin 2021/48

(21) Application number: 21170953.0

(22) Date of filing: 28.04.2021

(51) Int Cl.:
*B60C 1/00* *(2006.01)* *C08L 9/06* *(2006.01)*
*C08L 9/00* *(2006.01)* *C08K 3/36* *(2006.01)*
*C08L 25/16* *(2006.01)*

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.05.2020 JP 2020093555

(71) Applicant: SUMITOMO RUBBER INDUSTRIES
LIMITED
Kobe-shi
Hyogo-ken (JP)

(72) Inventor: IKAI, Takuma
Kobe-shi, Hyogo-ken, 651-0072 (JP)

(74) Representative: Manitz Finsterwald
Patent- und Rechtsanwaltspartnerschaft mbB
Martin-Greif-Strasse 1
80336 München (DE)

(54) **MOTORCYCLE TIRE**

(57)     Provided is a motorcycle tire in which dry grip performance and sag resistance are improved. The motorcycle tire has a tread made from a rubber composition including: a rubber component containing a diene-based rubber; and a filler containing not less than 40 parts by mass of silica per 100 parts by mass of the rubber component. The rubber composition satisfies the following expression (1) and expression (2),

$$\text{expression (1): } \tan\delta \text{ at } 70°C \geq 0.23,$$

and

$$\text{expression (2): } Tg \leq -8°C.$$

EP 3 915 807 A1

**Description**

BACKGROUND OF THE INVENTION

Field of the Invention

The present invention relates to a motorcycle tire.

Description of the Background Art

Tires are required to have grip performances such as dry grip performance to ensure safety and the like. In order to satisfy this requirement, various tires have been developed (Japanese Laid-Open Patent Publication No. 2019-203073).
As a method for improving dry grip performance, addition of a resin (grip resin) that contributes to improvement in grip force is conceivable. However, in this case, a temperature-dependent change in viscoelasticity tan8 increases, and a drawback arises in that dry grip performance during high-speed running decreases (so-called sag). In addition, although addition of a grip resin leads to improvement in grip performances, increase in the amount of the added grip resin leads to increase in the Tg of the rubber composition and also causes a drawback in that a crack is easily generated at low temperature.

SUMMARY OF THE INVENTION

The present invention addresses the problem of providing a motorcycle tire in which dry grip performance and sag resistance are improved.
As a result of a thorough study, the present inventor found that the above-described problem can be solved by, for a rubber composition including a rubber component containing a diene-based rubber and at least a predetermined amount of silica, setting the loss factor (tan$\delta$) at 70°C and the glass transition temperature (Tg) of the rubber composition to each fall within a predetermined range. The present inventor conducted further study, to complete the present invention.
Specifically, the present invention is directed to the following.

[1] A motorcycle tire having a tread made from a rubber composition including:

a rubber component containing a diene-based rubber; and
a filler containing not less than 40 parts by mass, preferably not less than 45 parts by mass, more preferably not less than 50 parts by mass, further preferably not less than 55 parts by mass, and further preferably not less than 60 parts by mass of silica per 100 parts by mass of the rubber component, wherein the rubber composition satisfies the following expression (1) and expression (2),

$$\text{expression (1): } \tan\delta \text{ at } 70°C \geq 0.23,$$

and

$$\text{expression (2): } Tg \leq -8°C.$$

[2] The motorcycle tire according to the above-described [1], wherein the expression (1) is the following expression (1),

$$\text{expression (1): } \tan\delta \text{ at } 70°C \geq 0.25.$$

[3] The motorcycle tire according to the above-described [1] or [2], wherein the expression (2) is the following expression (2),

$$\text{expression (2): } Tg \leq -12°C.$$

[4] The motorcycle tire according to any one of the above-described [1] to [3], wherein

the rubber composition further satisfies the following expression (3), a value of a right-hand side of the expression (3) is preferably 0.13, and the value of the right-hand side of the expression (3) is more preferably 0.12,

$$\text{expression (3):} \ |\tan\delta \text{ at } 30°\text{C} - \tan\delta \text{ at } 70°\text{C}| \leq 0.14.$$

[5] The motorcycle tire according to any one of the above-described [1] to [4], wherein the diene-based rubber contains not less than 70% by mass, preferably not less than 80% by mass, and more preferably not less than 90% by mass of a styrene-butadiene rubber.

[6] The motorcycle tire according to any one of the above-described [1] to [5], wherein the diene-based rubber is made from at least two types of diene-based rubbers having different glass transition temperatures.

[7] The motorcycle tire according to the above-described [6], wherein the at least two types of diene-based rubbers having different glass transition temperatures include

two types of styrene-butadiene rubbers having glass transition temperatures that are different from each other, or a styrene-butadiene rubber and a butadiene rubber having glass transition temperatures that are different from each other.

[8] The motorcycle tire according to any one of the above-described [1] to [7], wherein a proportion of the silica to the filler is not less than 50% by mass, preferably not less than 54% by mass, and more preferably not less than 58% by mass.

[9] The motorcycle tire according to any one of the above-described [1] to [8], wherein the rubber composition further includes a resin.

[10] The motorcycle tire according to any one of the above-described [1] to [9], wherein the motorcycle tire is a pneumatic tire.

[11] The motorcycle tire according to any one of the above-described [1] to [10], wherein

the tread includes a crown portion located at a center thereof in a tire axial direction and a pair of shoulder portions located outward of the crown portion in the tire axial direction, and

at least each of the shoulder portions is made from the rubber composition.

The present invention makes it possible to provide a motorcycle tire in which dry grip performance and sag resistance are improved.

BRIEF DESCRIPTION OF THE DRAWINGS

FIG. 1 shows an example of a cross-sectional view taken at a plane that includes a tire rotation axis of a motorcycle tire;

FIG. 2 shows an example of a cross-sectional view taken at a plane that includes the tire rotation axis, indicating a state where the motorcycle tire contacts a road surface (in the case where a crown portion is within a ground contact surface); and

FIG. 3 shows an example of the cross-sectional view taken at the plane that includes the tire rotation axis, indicating a state where the motorcycle tire contacts the road surface (in the case where the crown portion extends beyond the ground contact surface).

DESCRIPTION OF THE PREFERRED EMBODIMENTS

The present disclosure is directed to a motorcycle tire having a tread made from a rubber composition including: a rubber component containing a diene-based rubber; and a filler containing not less than 40 parts by mass of silica per 100 parts by mass of the rubber component. The rubber composition satisfies the following expression (1) and expression (2),

$$\text{expression (1):} \ \tan\delta \text{ at } 70°\text{C} \geq 0.23,$$

and

$$\text{expression (2):} \ Tg \leq -8°\text{C}.$$

Although not intended to be restricted by a theory, the following mechanism is conceivable as a mechanism that allows achievement of both dry grip performance and sag resistance in the present disclosure. That is, in order to suppress a so-called sag which is a decrease in dry grip performance during high-speed running, a loss factor tan8 at around 70°C (for example, 50 to 90°C) of a rubber composition that forms a tread is required to be kept high, and the temperature dependency of the loss factor tan8 is required to be made low. Considering this, in the present disclosure, the Tg of the rubber composition was lowered first. Thus, a temperature dependency curve of the tan8 was shifted to a low temperature side so that the temperature dependency at around 70°C was set to be low. Further, the value of the tan8 at 70°C (tan$\delta$ at 70°C) that was decreased accordingly, was attempted to be increased. This is considered to have led to a result in which, while high dry grip performance is exhibited, the high dry grip performance is maintained also during high-speed running.

It is preferable that a right-hand side of the expression (1) is 0.25.

It is preferable that a right-hand side of the expression (2) is -12°C.

It is preferable that the rubber composition further satisfies the following expression (3), a value of a right-hand side of the expression (3) is preferably 0.13, and the value of the right-hand side of the expression (3) is more preferably 0.12,

$$\text{expression (3): } |\tan\delta \text{ at } 30°\text{C} - \tan\delta \text{ at } 70°\text{C}| \leq 0.14.$$

It is preferable that the diene-based rubber contains not less than 70% by mass, preferably not less than 80% by mass, and more preferably not less than 90% by mass of a styrene-butadiene rubber.

It is preferable that the diene-based rubber is made from at least two types of diene-based rubbers having different glass transition temperatures.

It is preferable that the at least two types of diene-based rubbers having different glass transition temperatures include: two types of styrene-butadiene rubbers having glass transition temperatures that are different from each other; or a styrene-butadiene rubber and a butadiene rubber having glass transition temperatures that are different from each other.

It is preferable that a proportion of the silica to the filler is not less than 50% by mass, preferably not less than 54% by mass, and more preferably not less than 58% by mass.

It is preferable that the rubber composition further includes a resin.

It is preferable that the motorcycle tire is a pneumatic tire.

It is preferable that: the tread includes a crown portion located at a center thereof in a tire axial direction and a pair of shoulder portions located outward of the crown portion in the tire axial direction; and at least each of the shoulder portions is made from the rubber composition.

<Rubber Component>

In the present disclosure, the rubber component contains a diene-based rubber. In one preferable mode of the present disclosure, the rubber component is made from a diene-based rubber.

(Diene-Based Rubber)

Examples of the diene-based rubber include a styrene-butadiene rubber (SBR), a butadiene rubber (BR), and the like. The diene-based rubber preferably contains an SBR and a BR. The diene-based rubber may be made only from an SBR and a BR.

<<SBR>>

The SBR is not particularly limited, and it is possible to use, for example, SBRs that are generally used in the tire industry, such as emulsion-polymerized SBR (E-SBR) and solution-polymerized SBR (S-SBR). One type of these SBRs can be used, or two or more types of these SBRs can also be used.

Further, as the SBR, an unmodified SBR can be used, or a modified SBR can also be used. As the modified SBR, any of modified SBRs that are generally used in the tire industry can be used. Examples of such modified SBRs include a modified SBR into which a functional group that interacts with a filler such as silica has been introduced. Examples of such an SBR include: an end-modified SBR obtained by modifying at least one end of an SBR with a compound (modifier) having a functional group described below; a main chain-modified SBR having a functional group described below in the main chain thereof; a main chain/end-modified SBR having functional groups described below in the main chain thereof and at an end thereof (for example, a main chain/end-modified SBR that has a functional group described below in the main chain thereof and in which at least one end is modified with a compound (modifier) having a functional group described below); an end-modified SBR that is modified (coupled) by using a multifunctional compound having two or more epoxy groups in the molecule thereof, and to which a hydroxyl group or an epoxy group has been introduced; and the like.

Examples of the above-described functional group include an amino group (preferably, an amino group obtained by substituting a hydrogen atom of an amino group with an alkyl group having 1 to 6 carbon atoms), an amide group, a silyl group, an alkoxysilyl group (preferably, an alkoxysilyl group having 1 to 6 carbon atoms), an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably, an alkoxy group having 1 to 6 carbon atoms), a hydroxyl group, an oxy group, an epoxy group, and the like. These functional groups may have a substituent. Examples of the substituent can include substituents into which a functional group such as an amino group, an amide group, an alkoxysilyl group, a carboxyl group, or a hydroxyl group has been introduced.

Examples of the modified SBR can further include: modified SBRs obtained by further hydrogenating the above-described unmodified SBR or modified SBR; modified SBRs obtained by further epoxidizing the above-described unmodified SBR or modified SBR; modified SBRs obtained by further modifying the above-described unmodified SBR or modified SBR with tin; and the like. Among these modified SBRs, SBRs obtained by further hydrogenating the above-described modified SBR (modified and hydrogenated SBR) are preferable. Hydrogenated SBRs are obtained by decreasing the number of double bonds and increasing the number of single bonds, to have an improved mobility of molecular chains thereof. Thus, hydrogenated SBRs tend to exhibit an improved effect of entanglement among polymers and to have improved reinforcing properties. Therefore, hydrogenated SBRs are preferable from the viewpoint of the advantageous effect of the present disclosure.

As the SBR, an oil-extended SBR can be used, or a non-oil-extended SBR can also be used. In the case of using an oil-extended SBR, the extending oil content of the SBR, i.e., the amount of extending oil contained in the SBR, is preferably 10 to 50 parts by mass per 100 parts by mass of the rubber solid component of the SBR.

As the SBR, it is possible to use, for example, SBRs manufactured and sold by Sumitomo Chemical Co., Ltd., JSR Corporation, Asahi Kasei Corporation, Zeon Corporation, etc.

For the reason that the advantageous effect of the present disclosure is more suitably obtained, the styrene content of the SBR is preferably not less than 10% by mass, more preferably not less than 20% by mass, and further preferably not less than 30% by mass. Meanwhile, the styrene content is preferably not greater than 60% by mass, more preferably not greater than 55% by mass, and further preferably not greater than 50% by mass. The styrene content of the SBR in the present specification is calculated by $^1$H-NMR measurement.

For the reason that the advantageous effect of the present disclosure is more suitably obtained, the vinyl bond content of the SBR is preferably not less than 10%, more preferably not less than 20%, and further preferably not less than 30%. Meanwhile, the vinyl bond content is preferably not greater than 80%, more preferably not greater than 70%, further preferably not greater than 60%, and further preferably not greater than 50%. The vinyl bond content (1,2-bond butadiene unit content) of the SBR in the present specification is measured by infrared absorption spectrometry.

For the reason that the advantageous effect of the present disclosure is more suitably obtained, the glass transition temperature (Tg) of the SBR is preferably not lower than - 90°C, more preferably not lower than -50°C, and further preferably not lower than -40°C. Meanwhile, the Tg is preferably not higher than 0°C, more preferably not higher than -10°C, further preferably not higher than -15°C, further preferably not higher than -20°C, and further preferably not higher than -25°C. The glass transition temperature in the present specification is a value measured according to JIS K 7121 under the condition of a temperature rise rate of 10°C/min., by using a differential scanning calorimeter (Q200) manufactured by TA Instruments Japan Inc.

For the reason that the advantageous effect of the present disclosure is more suitably obtained, the weight-average molecular weight (Mw) of the SBR is preferably not less than 200 thousand and more preferably not less than 300 thousand. Meanwhile, the Mw is preferably not greater than 2 million, more preferably not greater than 1.5 million, and even more preferably not greater than 1 million. The weight-average molecular weight (Mw) in the present specification can be obtained by conversion, based on a polystyrene standard, of a value measured by gel permeation chromatography (GPC) (GPC-8000 series manufactured by Tosoh Corporation, detector: differential refractometer, column: TSKGEL SUPERMALTPORE HZ-M manufactured by Tosoh Corporation).

The amount of the SBR contained in 100% by mass of the rubber component is preferably not less than 70% by mass, more preferably not less than 80% by mass, and further preferably not less than 90% by mass. Further, the amount of the SBR may be 100% by mass. In the case of an oil-extended SBR, the amount of the SBR refers to the amount of the SBR itself excluding the extending oil.

<<BR>>

The BR is not particularly limited, and it is possible to use, for example, BRs that are generally used in the tire industry, such as a BR having a cis-1,4 bond content (cis content) not less than 90% (high-cis BR), a rare earth element-based butadiene rubber synthesized by using a rare earth element-based catalyst (rare earth element-based BR), a BR containing syndiotactic polybutadiene crystals (SPB-containing BR), and a modified BR (a high-cis modified BR, a low-cis modified BR). One type of these BRs can be used, or two or more types of these BRs can also be used. Among these BRs, a high-cis BR is preferable.

Examples of the high-cis BR include BRs manufactured by Zeon Corporation, BRs manufactured by Ube Industries, Ltd., BRs manufactured by JSR Corporation, and the like. The cis content of the high-cis BR is preferably not less than 95%, more preferably not less than 96%, further preferably not less than 97%, and further preferably not less than 98%. The cis content in the present specification is a value calculated by infrared absorption spectrum analysis. The rare earth element-based BR is synthesized by using a rare earth element-based catalyst. The rare earth element-based BR has a vinyl bond content (1,2 bond butadiene unit content) preferably not greater than 1.8% by mole, more preferably not greater than 1.0% by mole, and further preferably not greater than 0.8% by mole. The rare earth element-based BR has a cis content (cis-1,4 bond content) preferably not less than 95% by mole, more preferably not less than 96% by mole, and even more preferably not less than 97%. As the rare earth element-based BR, it is possible to use, for example, rare earth element-based BRs manufactured by LANXESS, etc.

Examples of the SPB-containing BR do not include SPB-containing BRs in which 1,2-syndiotactic polybutadiene crystals are merely dispersed in BR, but include SPB-containing BRs in which 1,2-syndiotactic polybutadiene crystals are dispersed in a state of being chemically bound to BR. As such SPB-containing BRs, it is possible to use SPB-containing BRs manufactured by Ube Industries, Ltd., etc.

Examples of the modified BR include BRs having been subjected to the same modification as that described regarding the above-described SBR. Examples of the modified BR include: modified BRs obtained by polymerizing 1,3-butadiene with a lithium initiator and then adding a tin compound to the polymerized 1,3-butadiene (tin-modified BRs); butadiene rubbers having a condensed alkoxysilane compound at an active end of a butadiene rubber thereof (modified BRs for silica); and the like. As such a modified BR, it is possible to use, for example, modified BRs manufactured by ZS Elastomers Co., Ltd., etc.

The amount of the BR contained in 100% by mass of the rubber component is preferably not greater than 40% by mass, more preferably not greater than 35% by mass, and further preferably not greater than 30% by mass. The lower limit of the amount of the BR is not particularly limited, and the amount may be 0% by mass and, for example, not less than 5% by mass, not less than 10% by mass, or not less than 20% by mass.

<<Other Diene-Based Rubbers>>

The rubber component may contain diene-based rubber components other than the SBR and the BR. As the other diene-based rubber components, it is possible to use crosslinkable rubber components that are generally used in the rubber industry. Examples of the crosslinkable rubber components include natural rubber (NR), isoprene rubber (IR), styreneisoprene-butadiene copolymer rubber (SIBR), styrene-isobutylene-styrene block copolymer (SIBS), chloroprene rubber (CR), acrylonitrile-butadiene rubber (NBR), polynorbornene rubber, and the like. One type of the other rubber components may be used singly, or two or more types of the other rubber components may be used together.

(Rubber Component Other Than Diene-Based Rubber)

The rubber component can contain a non-diene-based rubber. Examples of the non-diene-based rubber include isobutylene-isoprene-rubber (IIR), hydrogenated nitrile rubber (HNBR), ethylene-propylene rubber, silicone rubber, polyethylene chloride rubber, fluororubber (FKM), acrylic rubber (ACM), hydrin rubber, and the like. One type of these non-diene-based rubbers may be used singly, or two or more types of these non-diene-based rubbers may be used together.

<Filler>

The filler contains not less than 40 parts by mass of silica per 100 parts by mass of the rubber component. The present disclosure is intended for achievement of both dry grip performance and sag resistance with a rubber composition containing at least a predetermined amount of silica. In addition to the silica, it is possible to use, for the filler, any of fillers that are generally used in the rubber industry. Examples of such fillers include carbon black, and it is possible to further use aluminum hydroxide, alumina (aluminum oxide), clay, calcium carbonate, mica, and the like. One type of these fillers can be used, or two or more types of these fillers can be used.

As the filler other than silica, carbon black is preferable. As the filler, it is possible to suitably use, for example, a filler that contains silica, a filler that is made only from silica, a filler that contains silica and carbon black, and a filler that is made only from silica and carbon black. The proportion of the silica to the filler is preferably not less than 50% by mass, more preferably not less than 54% by mass, and further preferably not less than 58% by mass.

(Silica)

The silica is not particularly limited, and it is possible to use, for example, silicas that are generally used in the tire industry, such as a silica prepared by a dry process (anhydrous silica) and a silica prepared by a wet process (hydrous silica). Out of these silicas, hydrous silica prepared by a wet process is preferable because of a high silanol group content thereof. One type of these silicas may be used singly, or two or more types of these silicas may be used together.

The nitrogen adsorption specific surface area ($N_2SA$) of the silica is, from the viewpoint of low fuel consumption performance and wear resistance, preferably not less than 140 $m^2/g$, more preferably not less than 160 $m^2/g$, and further preferably not less than 170 $m^2/g$. Meanwhile, the $N_2SA$ is, from the viewpoint of low fuel consumption performance and processability, preferably not greater than 350 $m^2/g$, more preferably not greater than 300 $m^2/g$, and further preferably not greater than 250 $m^2/g$. The $N_2SA$ of the silica in the present specification is a value measured by the BET method according to ASTM D3037-93.

The amount of the silica contained per 100 parts by mass of the rubber component is, from the viewpoint of the advantageous effect of the present disclosure, preferably not less than 45 parts by mass, more preferably not less than 50 parts by mass, further preferably not less than 55 parts by mass, further preferably not less than 60 parts by mass, further preferably not less than 65 parts by mass, further preferably not less than 70 parts by mass, and further preferably not less than 75 parts by mass. Meanwhile, the amount is, from the viewpoint of wear resistance, preferably not greater than 150 parts by mass, more preferably not greater than 130 parts by mass, further preferably not greater than 110 parts by mass, and further preferably not greater than 90 parts by mass.

(Carbon Black)

As the carbon black, it is possible to use, as appropriate, carbon blacks that are generally used in the rubber industry. Examples of such carbon blacks can include GPF, FEF, HAF, ISAF, SAF, and the like. Other examples of the carbon blacks can include N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like. As a commercially available product, it is possible to use products from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon Co., etc. One type of these carbon blacks may be used singly, or two or more types of these carbon blacks may be used together.

The nitrogen adsorption specific surface area ($N_2SA$) of the carbon black is, from the viewpoint of wear resistance, grip performance, and the like, preferably not less than 40 $m^2/g$, more preferably not less than 50 $m^2/g$, further preferably not less than 70 $m^2/g$, and further preferably not less than 100 $m^2/g$. Meanwhile, the $N_2SA$ is, from the viewpoint of favorable dispersion, preferably not greater than 300 $m^2/g$, more preferably not greater than 250 $m^2/g$, further preferably not greater than 200 $m^2/g$, and further preferably not greater than 160 $m^2/g$. The $N_2SA$ of the carbon black is obtained according to JIS K 6217-2: 2001.

The dibutyl phthalate (DBP) absorption amount of the carbon black is, from the viewpoint of sufficient reinforcing properties, preferably not less than 50 ml/100 g and more preferably not less than 100 ml/100 g. Meanwhile, the DBP absorption amount of the carbon black is, from the viewpoint of wet grip performance, preferably not greater than 200 ml/100 g and more preferably not greater than 150 ml/100 g. The DBP absorption amount of the carbon black is measured according to JIS K 6217-4: 2001.

The amount of the carbon black contained per 100 parts by mass of the rubber component is, from the viewpoint of favorable ultraviolet crack resistance and favorable wear resistance, preferably not less than 1 part by mass, more preferably not less than 5 parts by mass, further preferably not less than 10 parts by mass, further preferably not less than 20 parts by mass, and further preferably not less than 30 parts by mass. Meanwhile, the amount is, from the viewpoint of processability and heat generation properties, preferably not greater than 200 parts by mass, more preferably not greater than 150 parts by mass, further preferably not greater than 120 parts by mass, further preferably not greater than 110 parts by mass, and further preferably not greater than 100 parts by mass.

The total amount of the fillers contained per 100 parts by mass of the rubber component is, from the viewpoint of sufficient reinforcing properties, preferably not less than 50 parts by mass and more preferably not less than 70 parts by mass. Meanwhile, the amount is, from the viewpoint of wet grip performance, preferably not greater than 250 parts by mass, more preferably not greater than 180 parts by mass, and further preferably not greater than 150 parts by mass.

(Silane Coupling Agent)

For the rubber composition, a silane coupling agent is preferably used. The silane coupling agent is not particularly limited, and it is possible to use any of silane coupling agents that are conventionally used in the rubber industry. Specific examples of such silane coupling agents include: silane coupling agents each having a sulfide group, such as bis(3-triethoxysilylpropyl)disulfide and bis(3-triethoxysilylpropyl)tetrasulfide; silane coupling agents each having a mercapto group, such as 3-mercaptopropyltrimethoxysilane, 3-mercaptopropyltriethoxysilane, 2-mercaptoethyltrimethoxysilane, and 2-mercaptoethyltriethoxysilane; silane coupling agents each having a thioester group, such as 3-octanoylthio-1-propyltriethoxysilane, 3-hexanoylthio-1-propyltriethoxysilane, and 3-octanoylthio-1-propyltrimethoxysilane; silane coupling agents each having a vinyl group, such as vinyltriethoxysilane and vinyltrimethoxysilane; silane coupling agents each having an amino group, such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among these silane coupling agents, silane coupling agents each having a sulfide group, silane coupling agents each having a mercapto group, and silane coupling agents each having a thioester group are preferable, and silane coupling agents each having a sulfide group are more preferable. One type of these silane coupling agents may be used singly, or two or more types of these silane coupling agents may be used together.

The amount of the silane coupling agent contained per 100 parts by mass of the silica is, from the viewpoint of sufficient chipping resistance, preferably not less than 1 part by mass, more preferably not less than 2 parts by mass, and further preferably not less than 5 parts by mass. Meanwhile, the amount of the silane coupling agent contained per 100 parts by mass of the silica is, from the viewpoint of a blending effect corresponding to the said amount, preferably not greater than 20 parts by mass, more preferably not greater than 15 parts by mass, and further preferably not greater than 12 parts by mass.

<Oil>

The rubber composition can contain an oil. The oil is not particularly limited, and it is possible to use, for example, process oils, vegetable fats and oils, mixtures thereof, and the like. Examples of the process oils can include paraffinic process oil, naphthenic process oil, aromatic process oil, and the like. Examples of the vegetable fats and oils can include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, tung oil, and the like. Among these oils, aromatic process oil is preferable. One type of these oils may be used singly, or two or more types of these oils may be used together.

The amount of the oil contained per 100 parts by mass of the rubber component is, from the viewpoint of the advantageous effect of the present disclosure, preferably not less than 10 parts by mass, more preferably not less than 15 parts by mass, and further preferably not less than 20 parts by mass. Meanwhile, the amount is, from the viewpoint of steering stability, preferably not greater than 80 parts by mass, more preferably not greater than 70 parts by mass, further preferably not greater than 60 parts by mass, and further preferably not greater than 50 parts by mass. In the present specification, the amount of the oil is inclusive also of the amount of the oil included in the oil-extended rubber.

<Other Blending Ingredients>

In addition to the aforementioned components, the rubber composition can contain, as appropriate, blending ingredients that are conventionally generally used in the tire industry, e.g., a resin, a liquid polymer, a wax, a processing aid, an antioxidant, stearic acid, zinc oxide, an inorganic potassium salt, a vulcanizing agent such as sulfur, a vulcanization accelerator, and the like.

(Resin)

As the resin, it is possible to use a resin component that is commonly used in the tire industry. Examples of such a resin component include a petroleum resin, a terpene-based resin, a rosin-based resin, a phenol-based resin, a coumarone-based resin, and the like. One type of these resins may be used singly, or two or more types of these resins may be used together. Among these resins, petroleum resins are preferable from the viewpoint of the advantageous effect of the present disclosure.

<<Petroleum Resin>>

The petroleum resin is not particularly limited, and examples thereof include an aliphatic petroleum resin, an aromatic petroleum resin, and an aliphatic/aromatic copolymer-based petroleum resin. One type of these petroleum resins may be used singly, or two or more types of these petroleum resins may be used together. As the aliphatic petroleum resin, it is possible to use a resin obtained by cationic polymerization of an unsaturated monomer that is a petroleum fraction (C5 fraction) having 4 or 5 carbon atoms, such as isoprene or cyclopentadiene (referred to also as a C5-based petroleum resin). As the aromatic petroleum resin, it is possible to use a resin obtained by cationic polymerization of a monomer that is a petroleum fraction (C9 fraction) having 8 to 10 carbon atoms, such as vinyltoluene, alkyl styrene, or indene (referred to also as a C9-based petroleum resin). As the aliphatic/aromatic copolymer-based petroleum resin, a resin obtained by copolymerization of the above-described C5 fraction and C9 fraction (referred to also as a C5C9-based petroleum resin), is used. Alternatively, a resin obtained by hydrogenating any of the aforementioned petroleum resins may be used. Among these petroleum resins, an aromatic petroleum resin is suitably used. Examples of the aromatic petroleum resin include an $\alpha$-methylstyrene resin. Examples of the $\alpha$-methylstyrene-based resin include: a homopolymer of $\alpha$-methylstyrene (poly-$\alpha$-methylstyrene); and a copolymer of a-methylstyrene and another compound including an aromatic compound and a phenol-based compound. Examples of the other compound capable of forming the copolymer include styrene, methylstyrene, methoxystyrene, divinylbenzene, and the like. As the $\alpha$-methylstyrene-based resin, $\alpha$-methylstyrene-based resins manufactured by Arizona Chemical Company, etc., are suitably used.

<<Terpene-Based Resin>>

Examples of the terpene-based resin include a polyterpene resin, a terpene-phenol resin, a terpene-styrene resin, and the like. One type of these terpene-based resins may be used singly, or two or more types of these terpene-based resins may be used together. Among these terpene-based resins, a terpene-styrene resin has particularly favorable compatibility with both the SBR and the BR and causes sulfur to be easily dispersed in the rubber component. Thus, a terpene-styrene resin is suitably used.
The polyterpene resin is a resin made from at least one type selected from among terpene compounds such as $\alpha$-pinene, $\beta$-pinene, limonene, and dipentene. One type of these terpene-based resins may be used singly, or two or more types of these terpene-based resins may be used together.
The terpene-phenol resin is a resin made from the aforementioned terpene compound and a phenol-based compound. The terpene-styrene resin is a resin made from the aforementioned terpene compound and styrene. The polyterpene resin and the terpene-styrene resin may each be a hydrogenated resin (a hydrogenated polyterpene resin or a hydrogenated terpene-styrene resin). The terpene-based resin can be hydrogenated by a publicly-known method, or a commercially available hydrogenated resin can also be used.
In the present disclosure, a commercially available product may be used as the terpene-based resin. Such a commercially available product is exemplified by products manufactured and sold by YASUHARA CHEMICAL CO., LTD., etc.

<<Rosin-Based Resin>>

The rosin-based resin is not particularly limited, and examples thereof include: natural resin rosin; a rosin-modified resin obtained by modifying the natural resin rosin through hydrogenation, disproportion, dimerization, esterification, or the like; and the like. One type of these rosin-based resins may be used singly, or two or more types of these rosin-based resins may be used together.

<<Phenol-Based Resin>>

The phenol-based resin is not particularly limited, and examples thereof include a phenol-formaldehyde resin, an alkylphenol-formaldehyde resin, an alkylphenol-acetylene resin, an oil-modified phenol-formaldehyde resin, and the like. One type of these phenol-based resins may be used singly, or two or more types of these phenol-based resins may be used together.

<<Coumarone-Based Resin>>

The coumarone-based resin is a resin that contains coumarone as a main component. Examples of the coumarone-based resin include: a coumarone resin; a coumarone-indene resin; a copolymer resin that contains coumarone, indene, and styrene as main components; and the like. One type of these coumarone-based resins may be used singly, or two or more types of these coumarone-based resins may be used together.

<<Amount of Resin>>

The amount of the resin contained per 100 parts by mass of the rubber component is, from the viewpoint of adhesion performance and grip performance, preferably not less than 1 part by mass, more preferably not less than 2 parts by mass, further preferably not less than 3 parts by mass, and particularly preferably not less than 5 parts by mass. Meanwhile, the amount is, from the viewpoint of wear resistance and grip performance, preferably not greater than 50 parts by mass, more preferably not greater than 40 parts by mass, further preferably not greater than 30 parts by mass, and particularly preferably not greater than 25 parts by mass.

<<Softening Point of Resin>>

The softening point of the resin is, from the viewpoint of grip performance, preferably not higher than 160°C, more preferably not higher than 145°C, and further preferably not higher than 130°C. Meanwhile, the softening point is, from the viewpoint of grip performance, preferably not lower than 20°C, more preferably not lower than 35°C, further preferably not lower than 50°C, and further preferably not lower than 80°C. The softening point in the present disclosure is a softening point that is measured with a ring and ball softening point measuring device according to JIS K 6220-1: 2001 and that is a temperature at which a ball has descended.

<<Weight-Average Molecular Weight of Resin>>

The weight-average molecular weight (Mw) of the resin is, from the viewpoint of unlikelihood of volatilization and favorable grip performance, preferably not less than 300, more preferably not less than 400, and further preferably not less than 500. Meanwhile, the Mw is preferably not greater than 15000, more preferably not greater than 10000, and further preferably not greater than 8000.

<<SP Value of Resin>>

The SP value of the resin is, from the viewpoint of excellent compatibility with the rubber component (particularly, SBR), preferably in a range of 8 to 11, more preferably in a range of 8 to 10, and further preferably in a range of 8.3 to 9.5. Use of a resin having an SP value that falls within the above-described range makes it possible to improve compatibility with the SBR and the BR and improve wear resistance and elongation at break.

(Liquid Polymer)

The liquid polymer is not particularly limited if the liquid polymer is a polymer that is in liquid form at normal temperature (25°C). Examples of such a polymer include liquid diene-based polymers such as liquid styrene-butadiene copolymers (liquid SBRs), liquid butadiene polymers (liquid BRs), liquid isoprene polymers (liquid IRs), and liquid styreneisoprene copolymers (liquid SIRs). One type of these liquid polymers may be used singly, or two or more types of these liquid polymers may be used together. Among these liquid polymers, liquid SBRs are preferable from the viewpoint of grip performance. Regarding the molecular weight of the liquid polymer, a polystyrene-converted weight-average molecular weight measured by gel permeation chromatography (GPC) is preferably $1.0 \times 10^3$ to $2.0 \times 10^5$.
In the case where a liquid polymer is contained, the amount of the liquid polymer contained per 100 parts by mass of the rubber component is, from the viewpoint of grip performance, preferably not less than 1 part by mass and more preferably not less than 5 parts by mass. Meanwhile, the amount is, from the viewpoint of wear resistance, preferably not greater than 40 parts by mass, more preferably not greater than 30 parts by mass, further preferably not greater than 20 parts by mass, and particularly preferably not greater than 10 parts by mass.

(Wax)

As the wax, it is possible to use waxes that are conventionally generally used in the tire industry. One type of these waxes may be used singly, or two or more types of these waxes may be used together. In the case where a wax is contained, the amount of the wax contained per 100 parts by mass of the rubber component is, from the viewpoint of the weather resistance of the rubber, preferably not less than 0.5 parts by mass and more preferably not less than 1 part by mass. Meanwhile, the amount is, from the viewpoint of suppression of whitening of the tire due to blooming, preferably not greater than 10 parts by mass and more preferably not greater than 5 parts by mass.

(Processing Aid)

As the processing aid, it is possible to use processing aids that are conventionally generally used in the tire industry. Examples of such processing aids include a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. One type of these processing aids may be used singly, or two or more types of these processing aids may be used together. In the case where a processing aid is contained, the amount of the processing aid contained per 100 parts by mass of the rubber component is, from the viewpoint of exhibiting an effect of improving processability, preferably not less than 0.5 parts by mass and more preferably not less than 1 part by mass. Meanwhile, the amount is, from the viewpoint of wear resistance and fracture strength, preferably not greater than 10 parts by mass and more preferably not greater than 8 parts by mass.

(Antioxidant)

As the antioxidant, it is possible to use antioxidants that are conventionally generally used in the tire industry. Specific examples of such antioxidants include antioxidants such as an amine-based compound, a quinoline-based compound, a quinone-based compound, a phenol-based compound, an imidazole-based compound, a phenylenediamine-based compound, and a carbamic acid metal salt. Preferable ones of these antioxidants are: phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine; and quinoline-based antioxidants such as 2,2,4-trimethyl-1,2-dihydroquinoline polymer and 6-ethoxy-2,2,4-trimethyl-1,2-dihydroquinoline. One type of these antioxidants may be used singly, or two or more of these antioxidants may be used together.
In the case where an antioxidant is contained, the amount of the antioxidant contained per 100 parts by mass of the rubber component is, from the viewpoint of the ozone crack resistance of the rubber, preferably not less than 0.5 parts by mass or preferably not less than 1 part by mass. Meanwhile, the amount is, from the viewpoint of wear resistance and wet grip performance, preferably not greater than 10 parts by mass and more preferably not greater than 5 parts by mass.

(Stearic Acid)

In the case where stearic acid is contained, the amount of the stearic acid contained per 100 parts by mass of the rubber component is, from the viewpoint of processability, preferably not less than 0.5 parts by mass and more preferably not less than 1 part by mass. Meanwhile, the amount is, from the viewpoint of a vulcanization rate, preferably not greater than 10 parts by mass and more preferably not greater than 5 parts by mass.

(Zinc Oxide)

In the case where zinc oxide is contained, the amount of the zinc oxide contained per 100 parts by mass of the rubber component is, from the viewpoint of processability, preferably not less than 0.5 parts by mass and more preferably not less than 1 part by mass. Meanwhile, the amount is, from the viewpoint of wear resistance, preferably not greater than 10 parts by mass and more preferably not greater than 5 parts by mass.

(Inorganic Potassium Salt)

As the inorganic potassium salt, it is possible to use inorganic potassium salts that are conventionally generally used in the tire industry. One type of these inorganic potassium salts may be used singly, or two or more types of these inorganic potassium salts may be used together. Examples of the inorganic potassium salt include: one or more types of potassium salts selected from the group consisting of potassium carbonate, potassium hydrogencarbonate, and potassium tetraborate; and the like. Among these inorganic potassium salts, potassium tetraborate is preferable.
The amount of the inorganic potassium salt contained per 100 parts by mass of the silica is, from the viewpoint of extrudability, preferably not less than 0.3 parts by mass and more preferably not less than 0.4 parts by mass. Meanwhile, the amount of the inorganic potassium salt contained per 100 parts by mass of the silica is, from the viewpoint of wear resistance, preferably not greater than 3 parts by mass, more preferably not greater than 2.5 parts by mass, even more preferably not greater than 2 parts by mass, and further preferably not greater than 1.45 parts by mass.

(Vulcanizing Agent)

As the vulcanizing agent, a sulfur is suitably used. As the sulfur, it is possible to use powdery sulfur, oil-treated sulfur, precipitated sulfur, colloidal sulfur, insoluble sulfur, highly dispersible sulfur, and the like. One type of these vulcanizing agents may be used singly, or two or more types of these vulcanizing agents may be used together.

Examples of a vulcanizing agent other than sulfur include: vulcanizing agents containing sulfur atoms, such as 1,6-hexamethylene-dithiosodium sulfate dihydrate and 1,6-bis(N,N'-dibenzylthiocarbamoyldithio)hexane; organic peroxides such as dicumyl peroxide; and the like. As the vulcanizing agent other than sulfur, it is possible to use, for example, vulcanizing agents manufactured by Taoka Chemical Co., Ltd., vulcanizing agents manufactured by Flexsys, vulcanizing agents manufactured by LANXESS, etc.

In the case where a sulfur is contained as a vulcanizing agent, the amount of the sulfur contained per 100 parts by mass of the rubber component is, from the viewpoint of ensuring a sufficient vulcanization reaction and obtaining favorable grip performance and wear resistance, preferably not less than 0.5 parts by mass and more preferably not less than 0.7 parts by mass. Meanwhile, the amount is, from the viewpoint of suppressing degradation, preferably not greater than 5.0 parts by mass, more preferably not greater than 4.0 parts by mass, and further preferably not greater than 3.0 parts by mass.

(Vulcanization Accelerator)

Examples of the vulcanization accelerator include sulfenamide-based vulcanization accelerators, thiazole-based vulcanization accelerators, thiuram-based vulcanization accelerators, thiourea-based vulcanization accelerators, guanidine-based vulcanization accelerators, dithiocarbamic acid-based vulcanization accelerators, aldehyde-amine-based vulcanization accelerators, aldehyde-ammonia-based vulcanization accelerators, imidazoline-based vulcanization accelerators, xanthate-based vulcanization accelerators, and the like. One type of these vulcanization accelerators may be used singly, or two or more types of these vulcanization accelerators may be used together. Among these vulcanization accelerators, at least one of sulfenamide-based vulcanization accelerators, guanidine-based vulcanization accelerators, and thiazole-based vulcanization accelerators is preferable, and it is more preferable to use a sulfenamide-based vulcanization accelerator and a guanidine-based vulcanization accelerator together.

Examples of the sulfenamide-based vulcanization accelerators include N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among these sulfenamide-based vulcanization accelerators, N-tert-butyl-2-benzothiazolyl sulfenamide (TBBS) is preferable.

Examples of the guanidine-based vulcanization accelerators include 1,3-diphenylguanidine (DPG), 1,3-di-o-tolylguanidine, 1-o-tolylbiguanide, a di-o-tolylguanidine salt of dicatechol borate, 1,3-di-o-cumenylguanidine, 1,3-di-o-biphenylguanidine, 1,3-di-o-cumenyl-2-propionylguanidine, and the like. Among these guanidine-based vulcanization accelerators, 1,3-diphenylguanidine (DPG) is preferable.

Examples of the thiazole-based vulcanization accelerators include 2-mercaptobenzothiazole, a cyclohexylamine salt of 2-mercaptobenzothiazole, di-2-benzothiazolyl disulfide, and the like. Among these thiazole-based vulcanization accelerators, 2-mercaptobenzothiazole is preferable.

In the case where a vulcanization accelerator is contained, the amount of the vulcanization accelerator contained per 100 parts by mass of the rubber component is preferably not less than 1 part by mass and more preferably not less than 2 parts by mass. Meanwhile, the amount of the vulcanization accelerator contained per 100 parts by mass of the rubber component is preferably not greater than 8 parts by mass, more preferably not greater than 7 parts by mass, and further preferably not greater than 6 parts by mass. If the amount of the vulcanization accelerator is set to fall within the above-described range, a fracture strength and an elongation tend to be able to be ensured.

<Rubber Composition>

The rubber composition of the present disclosure includes: a rubber component containing a diene-based rubber; and a filler containing not less than 40 parts by mass of silica per 100 parts by mass of the rubber component. In addition, the rubber composition satisfies the following expression (1) and expression (2),

$$\text{expression (1): } \tan\delta \text{ at } 70°C \geq 0.23,$$

and

$$\text{expression (2): } Tg \leq -8°C.$$

(Expression (1) and Expression (2))

Expression (1) defines that the value of a loss factor tan8 at 70°C (tanδ at 70°C) is not less than 0.23. Expression (2) defines that a Tg is not higher than -8°C. Here, the tan8 at 70°C and the Tg are values measured by the methods described in the section "EXAMPLES" described later. In the present disclosure, in order to achieve both dry grip performance and sag resistance, the Tg of the rubber composition was lowered, and thus a temperature dependency curve of the tan8 was shifted to a low temperature side. Further, the value of the loss factor tan8 at 70°C (tanδ at 70°C) that was decreased accordingly, was increased. This is considered to have led to a result in which: the tan8 at around 70°C (for example, 50 to 90°C) that contributes to suppression of decrease in dry grip performance during high-speed running can be kept high, and the temperature dependency of the tan8 can be made low; and, while high dry grip performance is exhibited, the high dry grip performance is maintained also during high-speed running.

The tan8 at 70°C in expression (1) is, from the viewpoint of the advantageous effect of the present disclosure, preferably not less than 0.24 and more preferably not less than 0.25. A higher tan8 at 70°C is more preferable from the viewpoint of the advantageous effect of the present disclosure. In terms of this sense, no upper limit is specified for the tan8 at 70°C, but the value of the tan8 at 70°C is usually not greater than 0.40. The Tg in expression (2) is, from the viewpoint of the advantageous effect of the present disclosure, preferably not higher than -9°C, more preferably not higher than -10°C, further preferably not higher than -11°C, and further preferably not higher than -12°C. A lower Tg is more preferable from the viewpoint of the advantageous effect of the present disclosure. In terms of this sense, no lower limit is specified for the Tg, but the Tg of a rubber composition forming a tread is usually not lower than -70°C.

The value of the tan8 at 70°C in expression (1) can be increased by an ordinary method. For example, the tan8 at 70°C can be increased by increasing the blending amount of a filler and, in the present disclosure, increasing especially the blending amount of the silica. The value of the Tg in expression (2) can be decreased by changing, mainly for the rubber component out of the components forming the rubber composition, the type and the blending proportion of each rubber that is contained in the rubber component. An example of this is as follows. Diene-based rubbers having different Tgs are combined with each other and the blending proportion of each of the rubbers is adjusted, so that the Tg of the rubber composition can be adjusted to a desired value. For example, in Example 5, TUFDENE 4850 (Tg: -25°C) and a predetermined end-modified BR (Tg: -90°C) were combined with each other to set the Tg of the rubber composition to -14°C, and meanwhile, in Example 4, UBEPOL BR150B (Tg: -107°C) having a lower Tg was used instead of the end-modified BR to set the Tg of the rubber composition to -18°C.

(Expression (3))

The rubber composition of the present disclosure preferably further satisfies the following expression (3),

$$\text{expression (3): } |\text{tan}\delta \text{ at } 30°C - \text{tan}\delta \text{ at } 70°C| \leq 0.14.$$

Expression (3) is a requirement that the absolute value of the difference between a loss factor tan8 at 30°C (tanδ at 30°C) and the tan8 at 70°C of the rubber composition is not larger than 0.14. The fact that the absolute value is small indicates that the difference between the tan8 at 30°C and the tan8 at 70°C of the rubber composition is small. That is, the said fact indicates that the temperature dependency of the tan8 of the rubber composition is low in these two temperature regions. A rubber composition having such a feature is considered to further contribute to achievement of a feature related to the advantageous effect of the present disclosure, i.e., the feature of causing the temperature dependency of the tan8 at around 70°C (for example, 50 to 90°C) to be low. The value of the right-hand side of expression (3) is preferably 0.13 and more preferably 0.12.

By adjustment to better satisfy expression (1) and expression (2), the absolute value of expression (3) can be adjusted accordingly to a smaller value.

<Motorcycle Tire>

The motorcycle tire of the present disclosure has a tread made from the above-described rubber composition. The tread may be one member that cannot be further divided, or may be a member that includes a plurality of portions and that can be further divided into the portions. Examples of the case where the tread is a member including a plurality of portions include but are not limited to a case where the tread includes: a crown portion located at a center thereof in a tire axial direction; and a pair of shoulder portions located outward of the crown portion in the tire axial direction. In this case, at least each of the shoulder portions is preferably made from the aforementioned rubber composition.

The motorcycle tire of the present disclosure is not particularly limited in terms of the type thereof, and may be either a pneumatic tire or a solid tire. However, the motorcycle tire is preferably used as a pneumatic tire. Further, the motorcycle tire may be used for various purposes. That is, the motorcycle tire may be used as an on-road tire, an off-road tire, a racing tire, or the like. However, the motorcycle tire is preferably a racing tire.

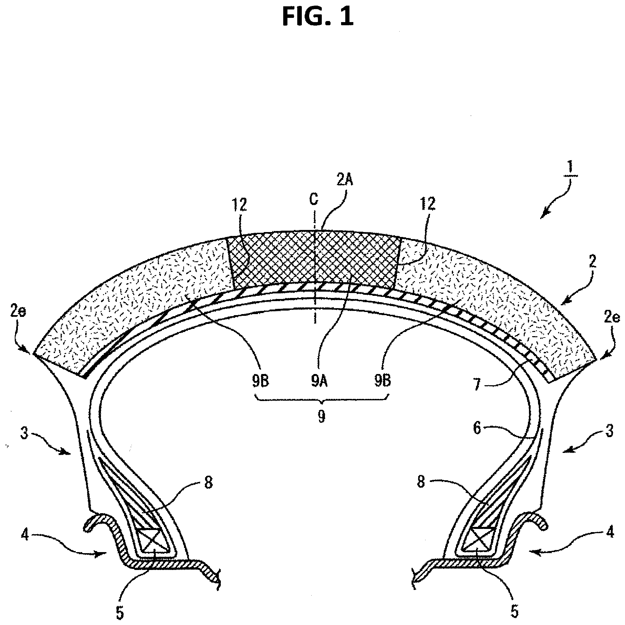

Hereinafter, a motorcycle tire will be described as an embodiment of the present disclosure with reference to the drawings. FIG. 1 shows an example of a cross-sectional view taken at a plane that includes a tire rotation axis of the motorcycle tire. A motorcycle tire 1 includes: a carcass 6 extending from a tread portion 2 through sidewall portions 3 to bead cores 5 of bead portions 4; and a belt layer 7 disposed, inside the tread portion 2, outward of the carcass 6 in a tire radial direction. In the above-described cross section, a tread surface 2A, of the tread portion 2, that contacts a road surface extends so as to be curved in an arc shape that projects outward in the tire radial direction. The outer ends in the tire axial direction of the tread surface 2A are tread edges 2e.

In the tread portion 2, a tread rubber 9 is disposed outward of the belt layer 7 in the radial direction. In the present embodiment, the tread rubber 9 forms a portion from the outer surface of the belt layer 7 to the tread surface 2A. As the tread rubber 9 of the present embodiment, a tread section including a plurality of division tread members arranged in the tire axial direction is shown. Here, the tread section includes division tread members made from two types of rubber compositions that contain different ingredients. Specifically, the tread section includes: a crown portion 9A having a center at a tire equator C; and a pair of shoulder portions 9B adjacent to the crown portion 9A and extending to the tread edges 2e. That is, two types of members, i.e., the crown portion 9A and the shoulder portions 9B, are arranged side by side from around the tire equator C toward both sides in the tire axial direction. Although the crown portion 9A and each shoulder portion 9B are demarcated by a normal 12 to the tread surface 2A, the manner of the demarcation is not limited. For example, the crown portion 9A and the shoulder portion 9B may be demarcated by a borderline that is tilted outward or inward in the tire axial direction from the tread surface 2A toward the belt layer 7.

In the present embodiment, the shoulder portions 9B forming the tread rubber 9 are each made from the above-described rubber composition. This makes it possible to provide, to the motorcycle tire 1, the advantageous effect of the present disclosure that, while high dry grip performance is exhibited, the high dry grip performance is maintained also during high-speed running.

In the present embodiment, a case where the tread rubber 9 includes two types of division tread members (the crown portion 9A and the shoulder portions 9B) has been described. However, the number of types of division tread members is not particularly limited and, for example, may be three or five.

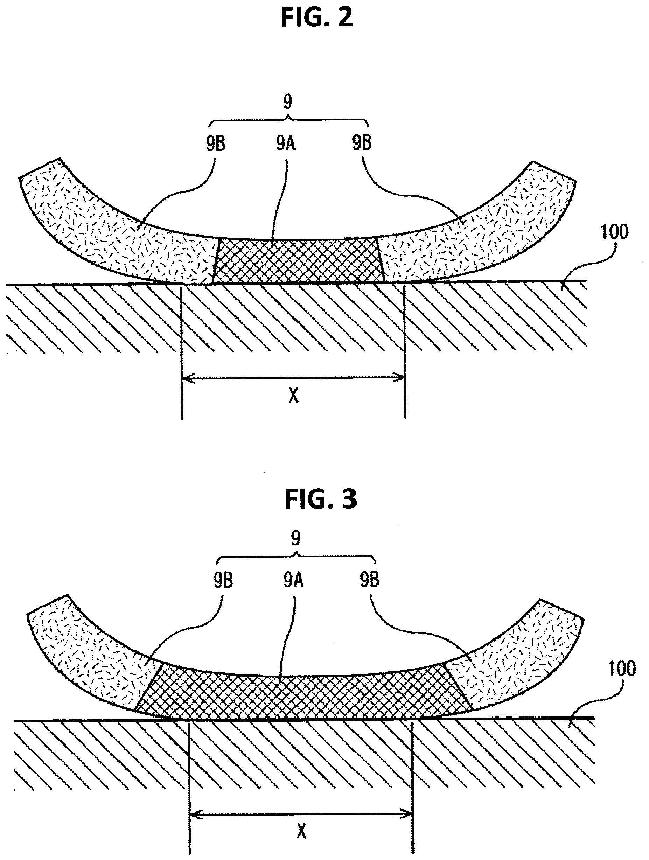

The division position (borderline) between the crown portion 9A and each shoulder portion 9B is preferably, as shown in FIG. 2, on the inner side of a width X of a ground contact surface (a portion at which the tread rubber 9 contacts a road surface 100 in a state where the tire is filled with a normal internal pressure and a normal load is applied to the tire). Consequently, transient characteristics (continuousness of grip performance when the tire is tilted during cornering) is more favorable than in the case where the above-described division position is on the outer side of the width X of the ground contact surface (see FIG. 3). The state shown in FIG. 2 is referred to as a state of being "within the ground contact surface", and the state shown in FIG. 3 is referred to as a state of being "beyond the ground contact surface".

In the present specification, the normal load refers to a maximum load (maximum load capacity), for a single tire having an applicable size, that is described in an industrial criterion/standard or the like effective in a region in which the tire is manufactured, sold, or used, such as the JATMA, TRA, or ETRTO standard. The normal internal pressure refers to an air pressure that corresponds to the above-described maximum load capacity.

<Manufacturing Method>

(Production of Rubber Composition)

The rubber composition of the present disclosure can be produced by a publicly-known method. For example, the aforementioned components are kneaded by using a rubber kneading device such as an open roll or a sealed kneading machine (Banbury mixer, kneader, or the like), whereby the rubber composition can be produced. The kneading step includes, for example, a base kneading step of kneading an additive and a blending ingredient other than a vulcanizing agent and a vulcanization accelerator, and a final kneading (finish-kneading) step of adding the vulcanizing agent and the vulcanization accelerator to the kneaded product obtained in the base kneading step and kneading the mixture. The base kneading step can also be further divided into a plurality of steps, as desired. A kneading condition is not particularly limited, and examples thereof include a condition that: kneading is performed for 3 to 10 minutes at a discharge temperature of 150 to 170°C in the base kneading step; and kneading is performed for 1 to 5 minutes at 50 to 110°C in the final kneading step.

(Manufacturing of Tire)

The rubber composition obtained by blending the above-described components is extruded in an unvulcanized state so as to correspond to a desired tread shape and is formed on a tire forming machine together with other tire members by an ordinary method, whereby an unvulcanized tire can be obtained. The unvulcanized tire is heated and pressurized (vulcanized) in a vulcanizing machine, whereby the motorcycle tire of the present disclosure can be obtained. A vulcanizing condition is not particularly limited, and examples thereof include a condition that vulcanization is performed for 5 to 30 minutes at 150 to 200°C.

EXAMPLES

Hereinafter, the present disclosure will be specifically described by means of examples, but the present disclosure is not limited to these examples.

<Various Chemicals>

SBR 1: TUFDENE 4850 (unmodified S-SBR from Asahi Kasei Corporation, styrene content: 40% by mass, vinyl bond content: 46%, Tg: -25°C, 50 parts by mass of an extending oil are contained per 100 parts by mass of a rubber solid component)
SBR 2: TUFDENE 3830 (unmodified S-SBR from Asahi Kasei Corporation, styrene content: 33% by mass, vinyl bond content: 34%, Tg: -39°C, 37.5 parts by mass of an extending oil are contained per 100 parts by mass of a rubber solid component)
BR 1: UBEPOL BR150B (a high-cis BR from Ube Industries, Ltd., synthesized by using a Co-based catalyst, cis content: 97%, vinyl bond content: 1%, Tg: -107°C)
BR 2: end-modified BR (an end-modified BR obtained by polymerizing a BR with a lithium initiator and modifying a polymerization end of the resultant BR with a mixture of tetraglycidyl-1,3-bisaminomethylcyclohexane and an oligomer component thereof, Mw: 550 thousand, Mw/Mn: 1.19, vinyl content: 12% by mass, cis content: 38% by mass, trans content: 50% by mass, Tg: -90°C)
Carbon black 1: SHOBLACK N110 (available from Cabot Japan K.K., $N_2SA$: 142 $m^2$/g (BET value), DBP absorption amount: 115 mL/100 g)
Carbon black 2: SHOBLACK N220 (available from Cabot Japan K.K., $N_2SA$: 111 $m^2$/g (BET value), DBP absorption amount: 115 mL/100 g)
Silica 1: ULTRASIL VN3 (available from Evonik Industries Ag, $N_2SA$: 175 $m^2$/g (BET value))
Silica 2: Zeosil 115GR (manufactured by Solvay Japan, Ltd., $N_2SA$: 115 $m^2$/g (BET value), CTAB adsorption specific surface area: 125 $m^2$/g)
Silane coupling agent 1: NXT (manufactured by GE Silicones Corporation)
Silane coupling agent 2: Si69 (manufactured by Evonik Industries Ag, bis(3-(triethoxysilyl)propyl)tetrasulfide)
Oil: Diana Process NH-70S (aromatic process oil from Idemitsu Kosan Co., Ltd.)
Resin: Sylvatraxx 4401 (aromatic petroleum resin from Arizona Chemical Company (α-methylstyrene resin: a copolymer of α-methylstyrene and styrene), softening point: 85°C, SP value: 9.1)
Wax: Ozoace 0355 (available from NIPPON SEIRO CO., LTD.)
Antioxidant: ANTIGENE 6C (N-(1,3-dimethylbutyl)-N'-phenyl-p-phenylenediamine available from Sumitomo Chemical Co., Ltd.)
Stearic acid: stearic acid "Tsubaki" (available from NOF CORPORATION)
Zinc oxide: Ginrei R (available from TOHO ZINC CO., LTD.)
Inorganic potassium salt: potassium tetraborate
Sulfur: HK-200-5 (powdery sulfur containing 5% of oil, from Hosoi Chemical Industry Co., Ltd.)
Vulcanization accelerator 1: NOCCELER NS-P (N-tert-butyl-2-benzothiazolyl sulfenamide (TBBS) available from Ouchi Shinko Chemical Industrial Co., Ltd.)
Vulcanization accelerator 2: NOCCELER D (1,3-diphenylguanidine (DPG) available from Ouchi Shinko Chemical Industrial Co., Ltd.)

<Manufacturing of Test Tires>

According to each of the formulas indicated in Table 1, the chemicals other than the sulfur and the vulcanization accelerators were kneaded for 5 minutes at a discharge temperature of 150°C by using a 1.7-L Banbury mixer manufactured by Kobe Steel, Ltd. Next, the sulfur and the vulcanization accelerators were added to the obtained kneaded product, and the mixture was kneaded with an open roll for 4 minutes until the temperature reached 105°C, whereby an unvulcanized rubber composition was obtained. The obtained unvulcanized rubber composition was formed into the shapes of a pair of shoulder portions of a tread and attached together with other tire members, whereby unvulcanized tires were manufactured. The unvulcanized tires were press-vulcanized for 12 minutes at 170°C, whereby test tires were obtained. Out of the test tires, the front tire had a size of 120/70ZR17, and the rear tire had a size of 170/60ZR17.

<Measurements and Evaluations>

Measurements and evaluations were conducted according to the methods indicated below. The results are indicated in Table 1.

(Tan$\delta$)

The rubber composition used for the shoulder portions of the tread of each type of test tire was measured for each of a loss factor tan8 at a temperature of 30°C and a loss factor tan8 at a temperature of 70°C under the condition of a frequency of 10Hz, a static strain of 10%, and a dynamic strain of 1% by using a viscoelasticity tester manufactured by Toyo Seiki Seisaku-sho, Ltd.

(Tg)

The glass transition temperature (Tg) of each type of rubber composition was measured as a tan$\delta$-peak temperature measured according to the following method. That is, a test piece sample (for example, 40 mm long $\times$ 7 mm wide) of the rubber composition was measured for a temperature distribution curve of tan$\delta$ under the condition of a frequency of 10Hz, an initial strain of 10%, an amplitude of $\pm$0.5%, a dynamic strain of 1.0%, and a temperature rise rate of 2°C/min., by using a dynamic viscoelasticity evaluation device (EPLEXOR series manufactured by NETZSCH-Gerätebau GmbH). A temperature corresponding to the largest tan8 value in the obtained temperature distribution curve (tan$\delta$-peak temperature) was regarded as Tg.

(Dry Grip Performance)

Respective test tires were mounted to normal rims, the internal air pressure of the front tire was adjusted to 250 kPa, and the internal air pressure of the rear tire was adjusted to 290 kPa. These tires were mounted to a motorcycle (4-cycle) having an engine displacement of 900 cc. The motorcycle was driven on a test course at a normal speed (100 km/h), and sensory evaluation for dry grip performance was made by the driver by means of an index, with the result of Comparative Example 1 being regarded as 100. A larger numerical value indicates better dry grip performance.

(Sag Resistance)

After the above-described dry grip performance was evaluated, sensory evaluation for the degree of suppressing decrease from the dry grip performance at the normal speed (sag resistance) was made by the driver by means of an index, with the result of Comparative Example 1 being regarded as 100. The sensory evaluation was made in the same manner, except that: the speed was set to be high (200 km/h); and the evaluation item was changed to the sag resistance. A larger numerical value indicates better sag resistance.

[Table 1]

| | | Examples | | | | | | | | | | | Comparative Examples | | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 | 5 |
| Blending amount (parts by mass) | SBR 1 | 105.0 | 105.0 | 105.0 | 105.0 | 105.0 | 105.0 | 105.0 | 105.0 | 105.0 | 105.0 | 105.0 | 120.0 | 60.0 | 105.0 | 120.0 | 120.0 |
| | SBR 2 | 41.3 | 41.3 | 41.3 | - | - | - | - | - | - | - | - | 27.5 | 82.5 | - | 27.5 | 27.5 |
| | BR 1 | - | - | - | 30.0 | - | 30.0 | 30.0 | 30.0 | - | - | - | - | - | 30.0 | - | - |
| | BR 2 | - | - | - | - | 30.0 | - | - | - | 30.0 | 30.0 | 30.0 | - | - | - | - | - |
| | Amount of extending oil in rubber component | 46.3 | 46.3 | 46.3 | *35.0* | 35.0 | 35.0 | 35.0 | 35.0 | 35.0 | 35.0 | 35.0 | 47.5 | 42.5 | 35.0 | 47.5 | 47.5 |
| | Carbon black 1 | 20.0 | 40.0 | 60.0 | 40.0 | 40.0 | - | 40.0 | - | 40.0 | - | - | 30.0 | 30.0 | 30.0 | 30.0 | 40.0 |
| | Carbon black 2 | - | - | - | - | - | 50.0 | - | 50.0 | - | 50.0 | 50.0 | - | - | - | - | - |
| | Silica 1 | 80.0 | 60.0 | 40.0 | 60.0 | 60.0 | 60.0 | - | - | - | 60.0 | - | 40.0 | 40.0 | 40.0 | 50.0 | 40.0 |
| | Silica 2 | - | - | - | - | - | - | 60.0 | 60.0 | 60.0 | - | 60.0 | - | - | - | - | - |
| | Silane coupling agent 1 | 5.6 | 4.8 | 3.2 | 4.8 | 4.8 | 4.8 | - | - | - | 4.8 | - | 3.2 | 3.2 | 3.2 | 4.0 | 3.2 |
| | Silane coupling agent 2 | - | - | - | - | - | - | 4.8 | 4.8 | 4.8 | - | 4.8 | - | - | - | - | - |
| | Oil | 6.2 | 6.2 | 6.2 | 17.5 | 17.5 | 6.2 | 6.2 | 6.2 | 17.5 | 17.5 | 17.5 | - | 5.0 | 12.0 | - | - |
| | Resin | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 |
| | Wax | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Antioxidant | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | Stearic acid | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Zinc oxide | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Inorganic potassium salt | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Sulfur | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 |
| | Vulcanization accelerator 1 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Vulcanization accelerator 2 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| Value of expression (1) (tan$\delta$ at 70°C) | | 0.24 | 0.26 | 0.27 | 0.25 | 0.23 | 0.27 | 0.25 | 0.27 | 0.23 | 0.24 | 0.25 | 0.21 | 0.19 | 0.20 | 0.23 | 0.24 |

(continued)

| | | Examples | | | | | | | | | | | Comparative Examples | | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 | 5 |
| Value of expression (2) (Tg (°C)) | | -8 | -9 | -10 | -18 | -14 | -15 | -18 | -15 | -14 | -11 | -11 | -7 | -11 | -12 | -7 | -7 |
| Value of expression (3) (|tanδ at 30°C-tanδ at 70°C|) | | 0.12 | 0.13 | 0.14 | 0.13 | 0.11 | 0.14 | 0.13 | 0.14 | 0.12 | 0.13 | 0.13 | 0.16 | 0.13 | 0.13 | 0.16 | 0.17 |
| Evaluation | Dry grip performance index | 115 | 120 | 120 | 115 | 110 | 120 | 115 | 120 | 110 | 115 | 115 | 100 | 90 | 95 | 110 | 115 |
| | Sag resistance index | 115 | 110 | 105 | 110 | 120 | 105 | 110 | 105 | 115 | 110 | 110 | 100 | 110 | 110 | 100 | 90 |

18

From Table 1, it is found that each of the motorcycle tires of the present disclosure has improved dry grip performance and sag resistance.

**Claims**

1. A motorcycle tire (1) having a tread made from a rubber composition comprising:

   a rubber component containing a diene-based rubber; and
   a filler containing not less than 40 parts by mass of silica per 100 parts by mass of the rubber component, wherein the rubber composition satisfies the following expression (1) and expression (2),

   $$\text{expression (1): } \tan\delta \text{ at } 70°\text{C} \geq 0.23,$$

   and

   $$\text{expression (2): } \text{Tg} \leq -8°\text{C}.$$

2. The motorcycle tire (1) according to claim 1, wherein the expression (1) is the following expression (1),

   $$\text{expression (1): } \tan\delta \text{ at } 70°\text{C} \geq 0.25.$$

3. The motorcycle tire (1) according to claim 1 or 2, wherein the expression (2) is the following expression (2),

   $$\text{expression (2): } \text{Tg} \leq -12°\text{C}.$$

4. The motorcycle tire (1) according to any one of claims 1 to 3, wherein the rubber composition further satisfies the following expression (3),

   $$\text{expression (3): } |\tan\delta \text{ at } 30°\text{C} - \tan\delta \text{ at } 70°\text{C}| \leq 0.14.$$

5. The motorcycle tire (1) according to any one of claims 1 to 4, wherein the diene-based rubber contains not less than 70% by mass of a styrene-butadiene rubber.

6. The motorcycle tire (1) according to any one of claims 1 to 5, wherein the diene-based rubber is made from at least two types of diene-based rubbers having different glass transition temperatures.

7. The motorcycle tire (1) according to claim 6, wherein the at least two types of diene-based rubbers having different glass transition temperatures include
   two types of styrene-butadiene rubbers having glass transition temperatures that are different from each other, or a styrene-butadiene rubber and a butadiene rubber having glass transition temperatures that are different from each other.

8. The motorcycle tire (1) according to any one of claims 1 to 7, wherein a proportion of the silica to the filler is not less than 50% by mass.

9. The motorcycle tire (1) according to any one of claims 1 to 8, wherein the rubber composition further comprises a resin.

10. The motorcycle tire (1) according to any one of claims 1 to 9, wherein the motorcycle tire (1) is a pneumatic tire.

11. The motorcycle tire (1) according to any one of claims 1 to 10, wherein
    the tread includes a crown portion (9A) located at a center thereof in a tire axial direction and a pair of shoulder portions (9B) located outward of the crown portion (9A) in the tire axial direction, and

at least each of the shoulder portions (9B) is made from the rubber composition.

# FIG. 1

# FIG. 2

# FIG. 3

Europäisches
Patentamt

European
Patent Office

Office européen
des brevets

# EUROPEAN SEARCH REPORT

Application Number

EP 21 17 0953

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 138 361 B2 (SUMITOMO RUBBER IND [JP]) 27 November 2018 (2018-11-27) * example 1 * * comparative example 1 * * claims 1,8,9 * * column 16, lines 45-47 * ----- | 1-11 | INV. B60C1/00 C08L9/06 C08L9/00 C08K3/36 C08L25/16 |
| A | EP 3 299 411 A1 (SUMITOMO RUBBER IND [JP]) 28 March 2018 (2018-03-28) * paragraphs [0001], [0012], [0014], [0031] * ----- | 1-11 | |
| A | JP 2006 348149 A (YOKOHAMA RUBBER CO LTD) 28 December 2006 (2006-12-28) * paragraph [0001]; examples * ----- | 1-11 | |

TECHNICAL FIELDS
SEARCHED     (IPC)

B60C
C08L

The present search report has been drawn up for all claims

| Place of search | Date of completion of the search | Examiner |
|---|---|---|
| Munich | 22 September 2021 | Baekelmans, Didier |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 17 0953

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2021

| Patent document cited in search report | | Publication date | Patent family member(s) | | Publication date |
|---|---|---|---|---|---|
| US 10138361 | B2 | 27-11-2018 | CN | 104379660 A | 25-02-2015 |
| | | | EP | 2871211 A1 | 13-05-2015 |
| | | | JP | 5576438 B2 | 20-08-2014 |
| | | | JP | 2014012798 A | 23-01-2014 |
| | | | US | 2015126674 A1 | 07-05-2015 |
| | | | WO | 2014007309 A1 | 09-01-2014 |
| EP 3299411 | A1 | 28-03-2018 | CN | 107614590 A | 19-01-2018 |
| | | | EP | 3299411 A1 | 28-03-2018 |
| | | | US | 2018134079 A1 | 17-05-2018 |
| | | | WO | 2016199555 A1 | 15-12-2016 |
| JP 2006348149 | A | 28-12-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2019203073 A